# EUROPÄISCHE PATENTSCHRIFT

(11) **EP 0 976 968 B1**
(45) Veröffentlichungstag und Bekanntmachung des Hinweises auf die Patenterteilung: **16.01.2002**
(21) Anmeldenummer: 99114817.2
(22) Anmeldetag: 29.07.1999
(51) Int. Cl.: F16N 7/38, F04B 9/02, F04B 1/28

(54) **Kolbenpumpen zur Förderung von Schmieröl zu verschiedenen Schmierstellen einer Maschine, eines Fördergerätes oder einer Rolltreppe**
Piston pumps for the transport of lubricant to different points in a machine, a conveyor or an escalator
Pompes à piston pour transporter du lubrifiant à des positions différentes d'une machine, d'un convoyeur ou d'un escalier roulant

(30) Priorität: 31.07.1998 DE 19834599; 16.10.1998 DE 19847776
(43) Veröffentlichungstag der Anmeldung: 02.02.2000
(73) Patentinhaber: perma-tec GmbH & Co. KG, 97717 Euerdorf (DE)
(72) Erfinder: Grebe, Karl, Ing., 82319 Starnberg (DE); May, Anton, Dipl.-Ing., 97705 Burkardroth (DE); Helbig, Claus, Dipl.-Ing., 97490 Poppenhausen (DE); Scheit, Bernd, Dipl.-Ing. (FH), 97708 Aschach (DE); Brand, Stefan, 97688 Bad Kissingen (DE); Bährend, Susanne, Dipl.-Phys., 97762 Hammelburg (DE)
(74) Vertreter: Albrecht, Rainer Harald, Dr.-Ing.

(56) Entgegenhaltungen:
- BE-A- 370 604
- FR-A- 1 510 351
- US-A- 5 411 382
- "VON GRAMMOPHONNADELN, HUFTGELENKEN UND DOSIERPUMPEN" TECHNISCHE RUNDSCHAU,CH,HALLWAG VERLAG. BERN, Bd. 86, Nr. 48, 2. Dezember 1994 (1994-12-02), Seiten 30-32, XP000490670 ISSN: 1023-0823

## Beschreibung

Vorrichtung zur Förderung von Schmieröl, insbesondere zur Förderung von Schmieröl zu verschiedenen Schmierstellen einer Maschine, eines Fördergerätes oder einer Rolltreppe, mit
einem Gehäuse,
mindestens zwei in dem Gehäuse in einer Reihe angeordneten Dreh-Hub-Kolbenpumpen und
einer Antriebseinrichtung für einen gemeinsamen Antrieb der Dreh-Hub-Kolbenpumpen,
wobei im Antriebsweg zwischen einer Antriebswelle der Antriebseinrichtung und den Dreh-Hub-Kolbenpumpen Mittel zur Veränderung des Förderzeitpunktes und der Fördermenge angeordnet sind.

Eine Vorrichtung des beschriebenen Aufbaus ist aus EP-A 0 586 280 bekannt. Die bekannte Vorrichtung weist ein Gehäuse mit mehreren, in einer Reihe angeordneten Dreh-Hub-Kolbenpumpen sowie eine Antriebseinrichtung mit einer Antriebswelle für einen gemeinsamen Antrieb der Dreh-Hub-Kolbenpumpen auf. Die Drehbewegung der Antriebswelle wird durch Kegelradpaarungen auf die Kolben der Pumpen übertragen. Die Kolbenachsen sind unter einem Winkel zur Rotationsachse der die Kolben rotierend antreibenden Abtriebswellen angeordnet. Zwischen der Abtriebswelle und der Kolbenstange ist ein Getriebe vorgesehen, welches aus einem Lenker und einer mit der Abtriebswelle verbundenen Muffe besteht und die Rotationsbewegung der Abtriebswelle in eine Hubbewegung der Kolbenstange umsetzt. Um die Fördermenge und den Förderzeitpunkt zu verändern, müssen Eingriffe in das Getriebe vorgenommen werden. Dazu müssen die Kegelradpaarungen ausgetauscht und/oder der Anschluß des Lenkers an die Muffe verändert werden. Die erforderlichen Eingriffe sind aufwendig. Eine feinfühlige, stufenlose Einstellung der Fördermengen ist nicht möglich.

Aus FR-A-1 510 351 ist eine Dreh-Hub-Kolbenpumpe zur Förderung von Schmieröl bekannt, deren Kolben einen Kolbenkopf aufweist, welcher in Kolbenlängsrichtung an einer Seite mit einer Steuerkontur versehen ist und an der anderen Seite von einer Druckfeder beaufschlagt ist. Der Kolben wird durch eine Zahnradpaarung rotierend angetrieben, wobei die Steuerkontur des Kolbenkopfes unter der Wirkung der zugeordneten Druckfeder an einem verstellbaren Widerlager anliegt und durch Verstellung des Widerlagers die Fördermenge der Dreh-Hub-Kolbenpumpe verändert werden kann. Werden mehrere Dreh-Hub-Kolbenpumpen dieser Bauform nebeneinander angeordnet, so erfordert dies einen großen Platzbedarf, der nicht immer zur Verfügung steht.

Der Erfindung liegt die Aufgabe zugrunde, eine kompakte und konstruktiv einfache Vorrichtung mit geringem Raumbedarf zur Förderung von Schmieröl anzugeben, mit der mehrere Schmierstellen einer Maschine, eines Fördergerätes oder einer Rolltreppe mit genau bemessenen Schmierölmengen versorgt werden können und für jede Schmierstelle eine individuelle Feineinstellung der Schmierölmenge an der Außenseite der Vorrichtung möglich ist.

Ausgehend von einer Vorrichtung mit den eingangs beschriebenen Merkmalen wird die Aufgabe erfindungsgemäß dadurch gelöst,
dass das Gehäuse zwei Gehäusehälften aufweist, wobei jede Gehäusehälfte mehrere in Reihe angeordnete Dreh-Hub-Kolbenpumpen enthält und wobei die Dreh-Hub-Kolbenpumpen der beiden Gehäusehälften nach Art einer Boxeranordnung paarweise zugeordnet sind,
dass die Kolben der Dreh-Hub-Kolbenpumpen Kolbenköpfe aufweisen, die in Kolbenlängsrichtung an einer Seite mit einer Steuerkontur versehen und an der anderen Seite von Druckfedern beaufschlagt sind, wobei die Druckfedern zwischen den Kolbenköpfen paarweise gegenüberliegender Dreh-Hub-Kolbenpumpen angeordnet sind,
dass die Antriebseinrichtung mindestens eine Schneckenwelle als Antriebswelle aufweist, die mit Radkränzen von in einer Reihe angeordneter Dreh-Hub-Kolbenpumpen kämmt und
dass die Steuerkonturen der Kolbenköpfe unter der Wirkung der zugeordneten Druckfedern an Widerlagern anliegen, die an der Gehäuseaußenseite verstellbar sind,
wobei die Kolben nach Maßgabe der am Kolbenkopf angeordneten Steuerkontur individuelle Kolbenhübe ausführen und wobei durch Verstellung der Widerlager die Fördermengen der Dreh-Hub-Kolbenpumpen individuell veränderbar sind.

Gemäß einer bevorzugten Ausführung der Erfindung ist der Kolbenkopf der Dreh-Hub-Kolbenpumpen gegenüber dem Radkranz, der den Kolben in Drehrichtung mitnimmt, axial verschiebbar gelagert. Ferner ist die Anordnung zweckmäßig so getroffen, dass die Steuerkontur der Kolbenköpfe gegenüber dem Radkranz durch Drehung verstellbar ist.

Im Rahmen der Erfindung liegt es, dass das Schmieröl durch außenseitige Rohrleitungen den Dreh-Hub-Kolbenpumpen zugeführt wird. Vorzugsweise enthält das Gehäuse eine Saugleitung sowie Förderbohrungen, wobei die Saugleitung sich parallel zur Schneckenwelle erstreckt und durch Saugbohrungen mit den Zylinderkammern der Dreh-Hub-Kolbenpumpen verbunden ist und wobei die Förderbohrungen die Zylinderkammern jeweils mit einer Förderleitung verbinden. Die von den Zylinderkammern abgehenden Förderleitungen führen zu den Schmierstellen und sind zweckmäßig als Stichleitungen ausgeführt.

Die erfindungsgemäße Vorrichtung ermöglicht eine feinfühlige und individuelle Einstellung des Kolbenhubs der Dreh-Hub-Kolbenpumpen. Zum Zwecke der Einstellung des Kolbenhubs weisen die Gehäusehälften vorzugsweise neben den Zylinderkammern angeordnete Gewindebohrungen für Gewindestifte auf, wobei das Ende der Gewindestifte das Widerlager für die Steuerkontur des zugeordneten Kolbens bildet. Durch individuelle Einstellung der Widerlager kann die Fördermenge jeder einzelnen Pumpe auf einen unterschiedlichen Betrag eingestellt werden. Auch durch die Höhe und den Verlauf der Steuerkontur in axialer Richtung läßt sich für jede Pumpe eine unterschiedliche Fördercharakteristik einstellen.

In seinem Grundaufbau enthält das Gehäuse zwei oder mehr nebeneinander angeordnete Dreh-Hub-Kolbenpumpen und ist durch einen Gehäusedeckel verschlossen. Die Druckfedern zur Beaufschlagung der Kolben sind an dem Gehäusedeckel abgestützt. Eine erfindungsgemäße Vorrichtung mit n in Reihe angeordneten Dreh-Hub-Kolbenpumpen kann nachträglich unter Beibehaltung des bisherigen Aufbaues um n Dreh-Hub-Kolbenpumpen erweitert werden, indem der Gehäusedeckel entfernt und eine Gehäusehälfte mit n Dreh-Hub-Kolbenpumpen so angeschlossen wird, dass die Dreh-Hub-Kolbenpumpen der beiden Gehäusehälften erfindungsgemäß nach Art einer Boxeranordnung paarweise einander zugeordnet sind. Die Kolbenköpfe der in einer Boxeranordnung paarweise zugeordneten Dreh-Hub-Kolbenpumpen können durch eine Mitnehmereinrichtung miteinander verbunden werden, so dass eine derartige Boxeranordnung ebenfalls durch eine einzige Schneckenwelle und demzufolge einem einzigen Antrieb antreibbar ist.

Bei einer aus JP-A 62-13771 bekannten Dreh-Hub-Kolbenpumpe, die als Kraftstoffpumpe für Fahrzeugbeheizungen eingesetzt wird, ist der Kolbenkopf mit einer Steuerkontur versehen, die an einem festen Widerlager anliegt. Zur Hubbegrenzung ist ein zusätzlicher, von außen verstellbarer Anschlagstift vorgesehen, der in der Rotationsachse des Kolbens angeordnet ist und am Kopfende einen Anschlag für den Kolben bildet. Je nach Stellung der Steuerkontur liegt diese entweder an dem Widerlager oder an dem Anschlagstift an. Der Stand der Technik aus JP-A 62-13781 gibt keine Anregung, ein an der Gehäuseaußenseite verstellbares Widerlager vorzusehen, welches bei einer Vollumdrehung des Kolbenkopfes immer an der Steuerkontur geführt ist und durch dessen Verstellung die Fördermenge der Dreh-Hub-Kolbenpumpe veränderbar ist. Erst die erfindungsgemäße Ausbildung ermöglicht die Anordnung von mehreren Kolbenpumpen in beliebiger Reihen- und Boxeranordnung und ermöglicht die Förderung mehrerer, individuell einstellbarer Fördermengenströme.

Die Anordnung mehrerer Zylinderkammern in dem als Zylinderblock ausgebildeten Gehäuse ermöglicht einen kompakten Aufbau des Förderaggregates. Sämtliche Kolben führen zwangsgesteuerte synchrone Drehbewegungen aus, wobei den Drehbewegungen kulissengesteuerte Hubbewegungen zugeordnet sind, die sowohl in bezug auf den Hub als auch in bezug auf die Abhängigkeit zwischen Hubbewegung und Drehwinkel individuell einstellbar sind. So können die Hubbewegungen der Kolben je Einstellung der Kulissensteuerungen im Gleichtakt oder phasenversetzt ausgeführt werden. Wenn die Hubbewegungen der Kolbenphasen phasenversetzt ausgeführt werden, verteilt sich der Energiebedarf auf eine volle Umdrehung und resultiert eine besonders gleichförmige Drehbewegung mit geringem Leistungsbedarf. Die erfindungsgemäße Vorrichtung ermöglicht die kontinuierliche Abgabe kleiner, genau dosierter Schmiermittelmengen.

Gemäß einer bevorzugten Ausführung der Erfindung weist die Vorrichtung eine Steuereinrichtung auf, welche die Antriebseinrichtung in Abhängigkeit eines den Betrieb der zu schmierenden Vorrichtung überwachenden Detektors ein- und ausschaltet, wobei die gemeinsam angetriebenen Dreh-Hub-Kolbenpumpen synchron mit dem Betrieb der zu schmierenden Vorrichtung konstante, individuell für jede Schmierstelle einstellbare Schmiermittelmengenströme fördern. Wenngleich eine kontinuierliche Abgabe kleiner Schmiermittelmengen bevorzugt ist, liegt es auch im Rahmen der Erfindung, daß die Schmiermittelabgabe taktweise in vorgegebenen Zeitintervallen erfolgt. Die Steuereinrichtung weist in diesem Fall Mittel zur Erfassung und Speicherung der Betriebsdauer der zu schmierenden Vorrichtung auf und schaltet die Antriebseinrichtung in vorgegebenen, an den Betrieb der zu schmierenden Vorrichtung gekoppelten Intervallen, wobei die gemeinsam angetriebenen Dreh-Hub-Kolbenpumpen vorbestimmte, individuell für jede Schmierstelle einstellbare Schmiermittelmengen abgeben. Die Steuereinrichtung kann Permanentspeicher aufweisen, so daß eingestellte Parameter bei Ausfall der Stromversorgung nicht verlorengehen. Die erfindungsgemäße Vorrichtung kann mit einem drehzahlregelbaren Antrieb ausgerüstet sein. Ferner kann die Steuereinrichtung Schnittstellen zum Anschluß an eine Fernwarte und zum Anschluß an eine Füllstandskontrolleinrichtung eines an das Gehäuse angeschlossenen Vorratsbehälters aufweisen.

An das Gehäuse ist zweckmäßig ein Schmiermittelvorratsbehälter angeschlossen, der mit einem in Gehäuselängsrichtung sich erstreckenden Verteilerkanal des Gehäuses verbunden ist, wobei der Verteilerkanal eine durch Saugbohrungen mit den Zylinderkammern der Dreh-Hub-Kolbenpumpen verbundene Saugleitung bildet. Der Schmiermittelvorratsbehälter kann aus einem gehäusefesten Behälter und einer an den gehäusefesten Behälter angeschlossenen austauschbaren Kartusche bestehen. Die Kartusche ist fabrikmäßig gefüllt und mit einem Folienverschluß versehen. Sie kann fernerhin ein Sichtfenster zur Füllstandskontrolle aufweisen. Die Anschlußöffnung des gehäusefesten Behälters enthält einen Dorn, der bei der Montage der Kartusche den Folienverschluß der Kartusche zerstört. Der Wechsel der Kartusche ist ohne Betriebsunterbrechung der Vorrichtung möglich.

Eine bevorzugte Anwendung der erfindungsgemäßen Vorrichtung ist die Schmierung von Kettenanordnungen einer Rolltreppe. Zur Kettenanordnung einer Rolltreppe gehören eine Hauptantriebskette, linke und rechte Stufenketten, linke und rechte Handlaufketten sowie eine die Stufenketten mit den Handlaufketten kinematisch verbindende Zwischenwellenkette. Die Ketten besitzen unterschiedliche Umlaufgeschwindigkeiten. Die erfindungsgemäße Vorrichtung eignet sich zur Zentralschmierung einer solchen Kettenanordnung und ermöglicht eine automatische, an den Betrieb der Rolltreppe gekoppelte Schmierung aller Ketten, wobei die Schmierstellen mit einer möglichst genau dosierten und auf die Umlaufgeschwindigkeit der Kette abgestimmten Schmiermittelmenge versorgt werden.

Im folgenden wird die Erfindung anhand einer lediglich ein Ausführungsbeispiel darstellenden Zeichnung erläutert. Es zeigen schematisch:
- Fig. 1: einen Schnitt durch eine erfindungsgemäße Vorrichtung mit mehreren in Reihe sowie nach Art einer Boxeranordnung gegenüberliegenden Dreh-Hub-Kolbenpumpen zur Förderung von Schmieröl zu verschiedenen Schmierstellen,
- Fig. 2: einen Längsschnitt durch die in Fig. 1 dargestellte Vorrichtung,
- Fig. 3: ausschnittsweise eine Seitenansicht der in Fig. 1 dargestellten Vorrichtung,
- Fig. 4: einen Querschnitt durch eine Vorrichtung mit einer Reihenanordnung mehrerer Dreh-Hub-Kolbenpumpen,
- Fig. 5: eine Explosionsdarstellung der unmittelbar an der Flüssigkeitsförderung beteiligten Teile einer Dreh-Hub-Kolbenpumpe,
- Fig. 6: eine Draufsicht auf eine erfindungsgemäße Vorrichtung mit einer Boxeranordnung der Dreh-Hub-Kolbenpumpen und einer gemeinsamen Antriebseinrichtung aller Dreh-Hub-Kolbenpumpen,
- Fig. 7: eine die Draufsicht auf eine erfindungsgemäße Vorrichtung mit einer Boxeranordnung der Dreh-Hub-Kolbenpumpen und zwei Antriebseinrichtungen,
- Fig. 8: die Kettenanordnung einer Rolltreppe mit einer erfindungsgemäßen Vorrichtung für die Ölschmierung der kinematisch gekoppelten Ketten.

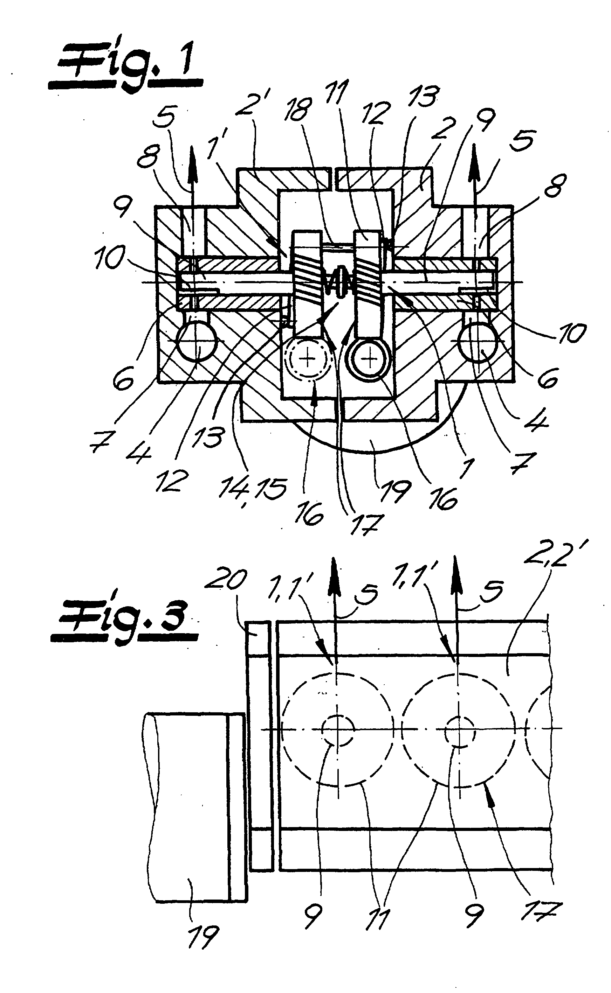

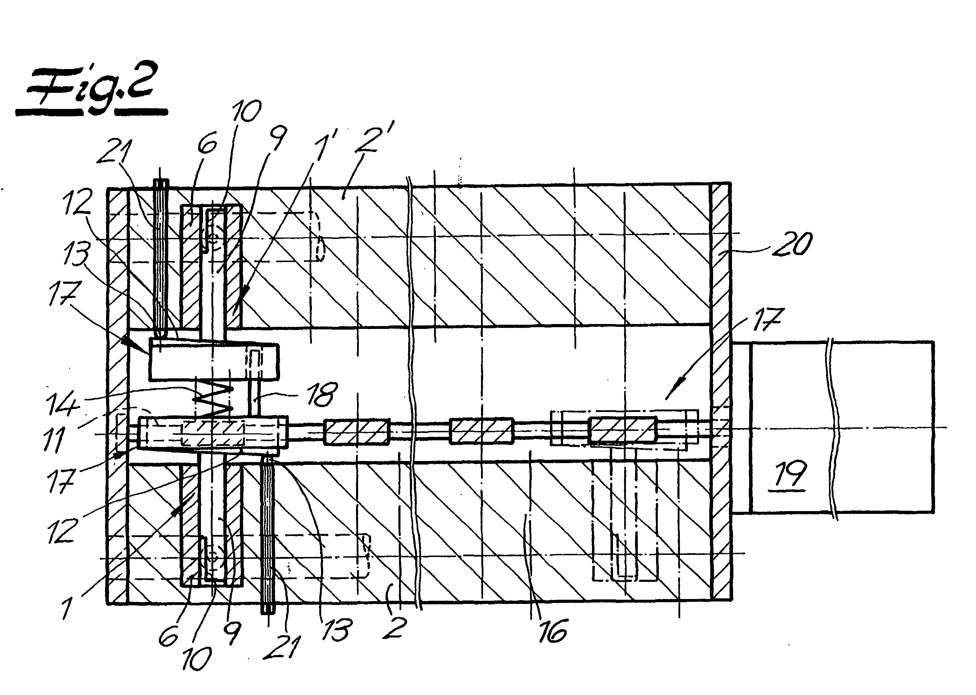

Die erfindungsgemäße Vorrichtung weist mehrere Pumpen 1, 1' auf, die entweder in einer in Fig. 4 dargestellten Reihenanordnung oder in zwei parallelen Reihen mit paarweise gegenüberliegenden Pumpen 1, 1' in einer Boxeranordnung, entsprechend den Darstellungen in den Fig. 1 und 2, angeordnet sind. Die Pumpen 1, 1' sind als Dreh-Hub-Kolbenpumpen ausgebildet, in einem gemeinsamen Gehäuse angeordnet, das bei der in Fig. 1 dargestellten Boxeranordnung aus zwei Gehäusehälften 2, 2' besteht, wobei jede Gehäusehälfte 2, 2' mehrere in Reihe angeordnete Dreh-Hub-Kolbenpumpen 1 bzw. 1' enthält. Im Falle einer Reihenanordnung gemäß Fig. 4 besteht das Gehäuse aus einer Gehäusehälfte 2 und einem Deckel 3.

Die Dreh-Hub-Kolbenpumpen 1, 1' saugen über eine gemeinsame Saugleitung 4, 4' aus einem nicht dargestellten Flüssigkeitsreservoir Flüssigkeit an und fördern diese über zugeordnete Förderleitungen 5 im Gehäuse und daran angeschlossene Schläuche oder Rohre zu Verbrauchsstellen. Jede Dreh-Hub-Kolbenpumpe 1, 1' weist eine in eine Zylinderbohrung des Gehäuses eingesetzte Zylinderbuchse 6 auf. An den Zylinderraum schließt jeweils eine mit der Saugleitung 4, 4' kommunizierende Saugbohrung 7 sowie gegenüberliegend eine mit der Förderleitung 5 kommunizierende Förderbohrung 8 an. In der Zylinderbuchse 6 ist ein Kolben 9 hin- und herbewegbar, der an seinem unteren Ende am äußeren Umfang eine Abflachung 10 aufweist, welche in Verbindung mit der zylindrischen Wand der Zylinderbuchse 6 einen Förderraum für die Flüssigkeit begrenzt.

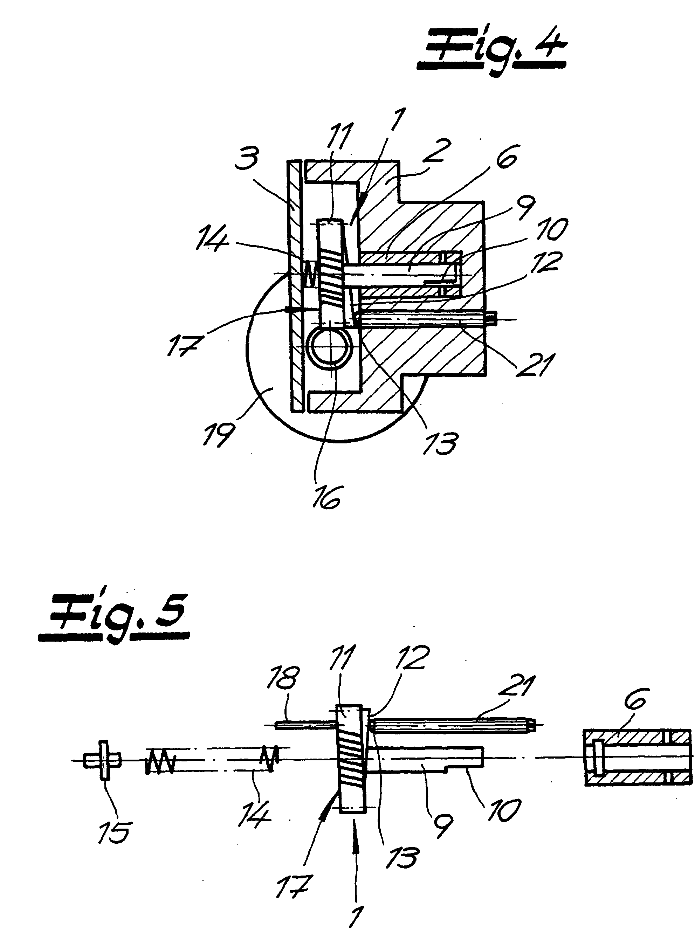

Der Kolben 9 ist axial verschiebbar gegenüber einem Radkranz 11 gelagert, der den Kolben 9 in Drehrichtung mitnimmt. Am oberen Ende des Kolbens 9 ist eine rampenförmige Steuerkontur 12 vorgesehen, die wie aus den Fig. 4 und 5 ersichtlich mit einem Widerlager 13 an der Spitze eines Gewindestiftes zusammenwirkt. Der Kolben 9 wird auf der gegenüberliegenden Seite des Kolbenkopfes mittels einer Druckfeder 14 beaufschlagt. Die Druckfeder 14 ist an ihrer anderen Seite mittels eines Drucklagers 15 abgestützt. Bei einer Boxeranordnung aus paarweise angeordneten Pumpen 1, 1' gemäß Fig. 1 kann das Drucklager 15 zwei gegenüberliegende Federn 14 lagern, wie dies in Fig. 5 dargestellt ist. Bei einer Reihenanordnung gemäß Fig. 4 stützt sich die Druckfeder 14 an einem Zapfen an der Innenseite des Gehäusedeckels 3 ab.

Die Radkränze 11 mehrerer in Reihe hintereinander liegender Dreh-Hub-Kolbenpumpen 1, 1' werden mittels einer längsverlaufenden Schneckenwelle 16 angetrieben. Bei einer Boxeranordnung gemäß Fig. 1 können die Radkränze 11 der paarweise gegenüberliegenden Kolbenköpfe 17 durch eine im rechten Teil der Fig. 1 ausgezogen dargestellte Schneckenwelle 16 angetrieben werden. Diese Ausführungsform ist auch in Fig. 2 im Längsschnitt dargestellt. In diesem Fall sind beide Kolbenköpfe 17 durch einen Mitnahmefinger 18 drehfest verbunden. Alternativ können die paarweise gegenüberliegend angeordneten Dreh-Hub-Kolbenpumpen 1, 1' auch von separaten Schneckenwellen angetrieben werden. Die Schneckenwelle 16 wird von einem vorzugsweise elektrischen Antrieb 19 betätigt, der an einer Stirnseite des Gehäuses 2, 2' an einem das Gehäuse dort abschließenden Deckel 20 angeflanscht ist (Fig. 3).

Durch den elektrischen Antrieb wird die Schneckenwelle 16 je nach Fördermedium und Förderzweck entweder kontinuierlich oder diskontinuierlich angetrieben. Dabei versetzen die Radkränze 11 durch ihren formschlüssigen Dreheingriff die Kolben 9 in eine Drehbewegung. In der in Fig. 1 dargestellten Position steht der von der Abflachung 10 am Kolben 9 und der umgebenden Zylinderwand gebildete Förderraum der Saugbohrung 7 gegenüber und nimmt dadurch flüssiges Medium auf. Durch die Verdrehung der rampenförmigen Steuerkontur 12 und deren Abgleiten auf dem Widerlager 13 wird der Kolben 9 in Richtung zum Schneckenrad bzw. Radkranz 11 gegen Druckfedern angehoben. Dabei wird weiterhin Flüssigkeit in den Förderraum gesaugt, solange bis die Abflachung durch Verdrehung von - der Saugbohrung 7 weggedreht ist. Beim weiteren Verdrehen des Kolbens gelangt die Abflachung 10 auf die gegenüberliegende Seite, wobei gleichzeitig durch die Druckfeder 14 und eine entsprechend abgeflachte Steuerkontur eine auswärts gerichtete Bewegung des Kolbens 9 erfolgt, so daß die im Förderraum vorhandene Flüssigkeit durch die Förderbohrung 8 aus der Zylinderbuchse 6 herausgedrückt wird.

Die in Fig. 1 dargestellte Steuerkontur 12 der Pumpen 1' in der linken Hälfte des Gehäuses kann entweder genauso wie die der gegenüberliegenden Pumpen 1 ausgebildet sein oder aufgrund einer geänderten oder gegenüber der Steuerkontur im Drehwinkel versetzten Anordnung - wie dargestellt - eine zeitlich und/oder mengenmäßig unterschiedliche Fördercharakteristik aufweisen. Durch entsprechende Verdrehung der Steuerkonturen 12 der durch eine gemeinsame Schneckenwelle 16 angetriebenen Kolben 9 können unterschiedliche Förderzeitpunkte der einzelnen Dreh-Hub-Kolbenpumpen 1, 1' erreicht werden. Durch die Höhe der rampenförmigen Steuerkontur 12 können unterschiedliche Fördermengen je Umdrehung des Radkranzes 11 eingestellt werden. Es ergibt sich somit durch einen einzigen Antrieb die Möglichkeit, über eine Schneckenwelle 16 eine Vielzahl von Pumpen 1, 1' mit unterschiedlichen Fördermengen und Förderzeitpunkten anzusteuern.

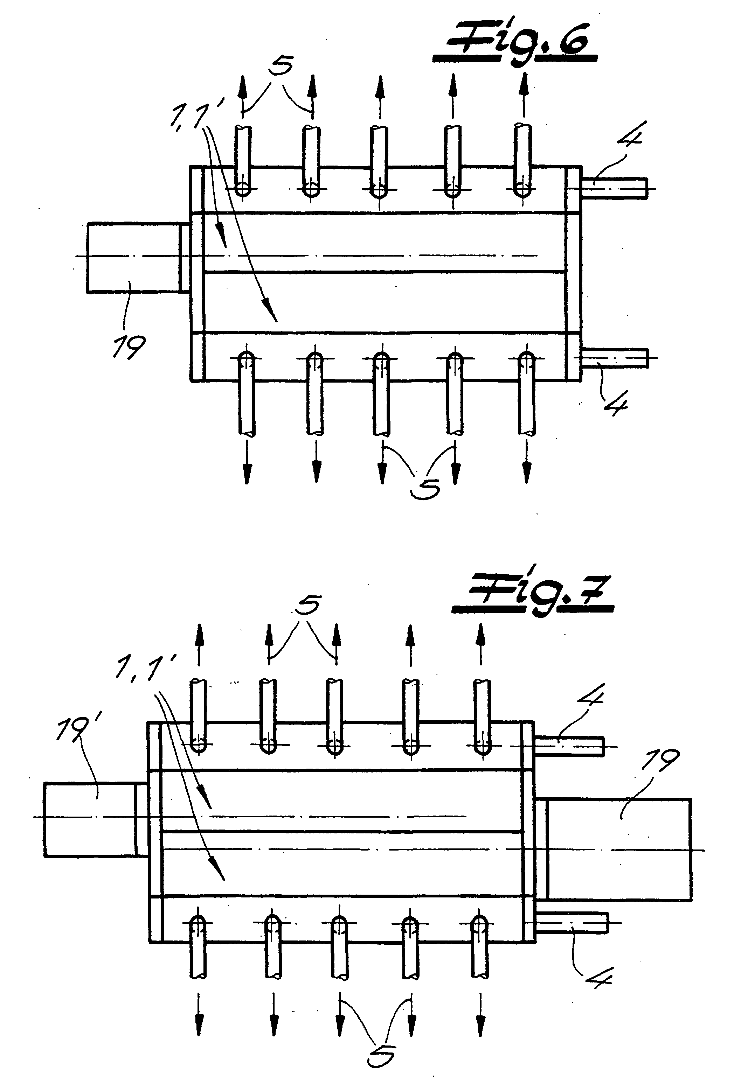

Dadurch können Schmierstellen an Maschinen oder Fördergeräten wie Rolltreppen entsprechend dem unterschiedlichen Schmiermittelbedarf mit exakten Mengen von Schmieröl versorgt werden. Wenn mehrere Förderleitungen 5 an eine gemeinsame Verbrauchsstelle angeschlossen sind, ergibt sich bei einer zeitlich versetzten Förderung der einzelnen 1, 1' Pumpen insgesamt eine annähernd kontinuierliche Förderung an diese Verbrauchsstelle. Durch die in den Fig. 6 und 7 verdeutlichte Boxeranordnung mehrerer Dreh-Hub-Kolbenpumpen 1, 1' ergeben sich weitere Variationsmöglichkeiten. Dabei können gemäß Fig. 6 alle Pumpen 1, 1' durch einen einzigen Antrieb 19 angetrieben werden. In diesem Fall ist gemäß den Fig. 1 und 2 für jedes gegenüberliegende Pumpenpaar 1, 1' ein Mitnahmefinger 18 zwischen den zugeordneten Kolbenköpfen 17 vorgesehen. Der Mitnahmefinger 18 läßt axiale Verschiebungen der Kolben 9 relativ zueinander zu.

Gemäß der in Fig. 7 dargestellten Ausführung wird die unten liegende Pumpenreihe über eine Schneckenwelle von einem elektrischen Antrieb 19 angetrieben, während die obere Pumpenreihe über eine Schneckenwelle von einem zweiten Antrieb 19' angetrieben wird. Je nach erforderlicher Förderleistung der Pumpenreihen können die Antriebe 19, 19' auf eine unterschiedliche Leistungsfähigkeit ausgelegt sein.

Die Widerlager 13 der Dreh-Hub-Kolbenpumpen 1, 1' sind an der Spitze eines Gewindestiftes 21 ausgebildet, der von einer im Gehäuse 2, 2' vorgesehenen Gewindebohrung aufgenommen wird. Die Gewindebohrung erstreckt sich vom Außenumfang des Gehäuses in den Innenhohlraum hinein, in welchem die Schneckenwelle 16 gelagert ist. An dem zum Außenumfang des Gehäuses zeigenden Teil weist der Gewindestift 21 einen Schlitz zum Eingriff eines Werkzeuges auf. Selbstverständlich können auch andere Werkzeugaufnahmen, wie beispielsweise ein Innensechskant anstelle des Schlitzes vorgesehen sein. Durch die Zugänglichkeit des Gewindestiftes 21 von außen kann die Förderleistung jeder Dreh-Hub-Kolbenpumpe 1, 1' durch Verdrehen des Gewindestiftes 21 und die dadurch veränderte Position des Widerlagers 13 in einfacher Weise eingestellt werden. Die Vorrichtung ist einfach im Aufbau und wartungsfreundlich sowie aufgrund ihres modularen Aufbaus flexibel einsetzbar.

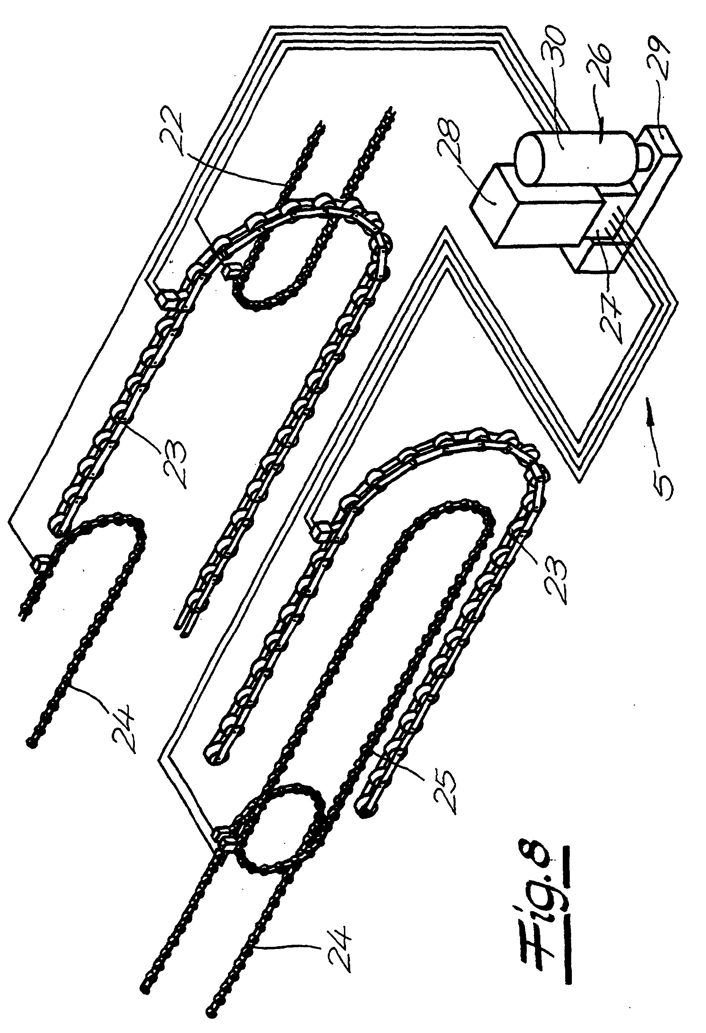

Die beschriebene Vorrichtung eignet sich besonders zur Ölschmierung von mehreren kinematisch gekoppelten Ketten einer Transporteinrichtung, insbesondere für die Schmierung der Ketten einer Rolltreppe. Dieser Anwendungsfall ist in der Fig. 8 dargestellt. Zu der in Fig. 8 dargestellten Kettenanordnung einer Rolltreppe gehören eine Hauptantriebkette 22, linke und rechte Stufenketten 23, linke und rechte Handlaufketten 24 sowie eine die Stufenketten 23 mit den Handlaufketten 24 kinematisch verbindende Zwischenwellenkette 25. Die Ketten laufen mit unterschiedlichen Umlaufgeschwindigkeiten um und werden an Schmierstellen mit Schmieröl beaufschlagt. Die Schmierölversorgung erfolgt mittels einer zentralen Schmiervorrichtung. Zum grundsätzlichen Aufbau dieser Vorrichtung gehören ein Schmiermittelvorratsbehälter 26, eine an den Schmiermittelvorratsbehälter 26 angeschlossene Dosiervorrichtung 27, mehrere Schmiermittelleitungen 5 für den Transport des Schmiermittels von der Dosiervorrichtung 27 zu jeweils einer Schmierstelle an einer Kette sowie eine Steuereinrichtung 28 für den Betrieb der Dosiervorrichtung 27, der ein nicht dargestellter Detektor zur Erfassung des Betriebs der Rolltreppe zugeordnet ist. Der Detektor kann beispielsweise die Umdrehung einer Welle der Rolltreppe erfassen. Die Dosiervorrichtung 27 hat den zuvor beschriebenen Aufbau. Der Schmiermittelvorratsbehälter 26 ist auf das Gehäuse der Dosiervorrichtung 27 aufgesetzt und mit einem in Gehäuselängsrichtung sich erstreckenden Verteilerkanal des Gehäuses verbunden. Der Verteilerkanal bildet eine durch Saugbohrungen mit den Zylinderkammern der Dreh-Hub-Kolbenpumpen verbundene Saugleitung. Der Fig. 8 entnimmt man, daß der Schmiermittelvorratsbehälter 26 aus einem gehäusefesten Behälter 29 und einer an dem gehäusefesten Behälter angeschlossenen austauschbaren Kartusche 30 besteht. Die Kartusche 30 ist fabrikmäßig gefüllt und weist einen Folienverschluß auf. Die Anschlußöffnung des gehäusefesten Behälters 29 enthält einen Dorn, der bei der Montage der Kartusche 30 den Folienverschluß zerstört. Der Kartuschenwechsel ist ohne Unterbrechung des Betriebs der Rolltreppe möglich.

Die Steuereinrichtung 28 schaltet die Dosiervorrichtung 27 nach Maßgabe eines Ein-/Aus-Signals, welches von dem den Betrieb der Rolltreppe überwachenden Detektor abgegeben wird. Die Dosiervorrichtung 27 arbeitet synchron mit dem Betrieb der Rolltreppe unter kontinuierlicher Förderung eines konstanten, individuell für jede Schmierstelle einstellbaren Schmiermittelmengenstroms.

Im Rahmen der Erfindung liegt es auch, daß die Steuereinrichtung 28 Mittel zur Erfassung und Speicherung der Betriebsdauer der Transporteinrichtung aufweist und die Dosiervorrichtung 27 in vorgegebenen, an den Betrieb der Rolltreppe gekoppelten Intervallen schaltet, wobei die Dosiervorrichtung 27 bei jedem Schaltvorgang eine bestimmte Schmiermittelmenge abgibt.

Der gehäusefeste Behälter 29 kann mit einer Füllstandskontrolleinrichtung ausgerüstet sein, die elektrische Signale an die Steuereinrichtung 28 abgibt. Diese kann eine Schnittstelle zum Anschluß an eine Fernwarte aufweisen.

Die erfindungsgemäße Vorrichtung ermöglicht eine genau dosierte, konstante und reproduzierbare Abgabe von Schmierölen. Bei kontinuierlicher Schmierung der Kettenanordnung einer Rolltreppe beträgt die Schmiermittelabgabemenge an jedem Zylinder üblicherweise zwischen 12 und 60 ml/h. Ohne weiteres förderbar sind Öle mit einer kinematischen Viskosität bis zu 2.200 m²/s nach DIN 51561 (bei 40 °C).

Die Förderleistung der Dosiervorrichtung 27 ist verhältnismäßig unempfindlich gegen temperaturbedingte Viskositätsänderungen. Das trägt zu einer hohen Dosiergenauigkeit und guten Reproduzierbarkeit der Dosiermengen bei.

Das Ausführungsbeispiel beschreibt die Schmierung der Kettenanordnung einer Rolltreppe. Es versteht sich, daß die erfindungsgemäße und in den Ausführungsbeispielen erläuterte Vorrichtung auch für Kettenanordnungen in anderen Transporteinrichtung eingesetzt werden kann.

## Patentansprüche

1. Vorrichtung zur Förderung von Schmieröl, insbesondere zur Förderung von Schmieröl zu verschiedenen Schmierstellen einer Maschine, eines Fördergerätes oder einer Rolltreppe, mit
einem Gehäuse (2, 2'),
mindestens zwei in dem Gehäuse (2, 2') in einer Reihe angeordneten Dreh-Hub-Kolbenpumpen (1, 1') und
einer Antriebseinrichtung für einen gemeinsamen Antrieb der Dreh-Hub-Kolbenpumpen (1, 1'),
wobei im Antriebsweg zwischen einer Antriebswelle (16) der Antriebseinrichtung und den Dreh-Hub-Kolbenpumpen (1, 1') Mittel zur Veränderung des Förderzeitpunktes und der Fördermenge angeordnet sind, **dadurch gekennzeichnet,**
**dass** das Gehäuse zwei Gehäusehälften (2, 2') aufweist, wobei jede Gehäusehälfte (2, 2') mehrere in Reihe angeordnete Dreh-Hub-Kolbenpumpen (1, 1') enthält und wobei die Dreh-Hub-Kolbenpumpen (1, 1') der beiden Gehäusehälften (2, 2') nach Art einer Boxeranordnung paarweise zugeordnet sind,
**dass** die Kolben (9) der Dreh-Hub-Kolbenpumpen (1, 1') Kolbenköpfe aufweisen, die in Kolbenlängsrichtung an einer Seite mit einer Steuerkontur (12) versehen und an der anderen Seite von Druckfedern (14) beaufschlagt sind, wobei die Druckfedern (14) zwischen den Kolbenköpfen (17) paarweise gegenüberliegender Dreh-Hub-Kolbenpumpen (1, 1') angeordnet sind,
**dass** die Antriebseinrichtung mindestens eine Schneckenwelle als Antriebswelle (16) aufweist, die mit Radkränzen (11) von in einer Reihe angeordneter Dreh-Hub-Kolbenpumpen (1, 1') kämmt und
**dass** die Steuerkonturen (12) der Kolbenköpfe (17) unter der Wirkung der zugeordneten Druckfedern (14) an Widerlagern (13) anliegen, die an der Gehäuseaußenseite verstellbar sind,
wobei die Kolben (9) nach Maßgabe der am Kolbenkopf (17) angeordneten Steuerkontur (12) individuelle Kolbenhübe ausführen und wobei durch Verstellung der Widerlager (13) die Fördermengen der Dreh-Hub-Kolbenpumpen (1, 1') individuell veränderbar sind.

2. Vorrichtung nach Anspruch 1, **dadurch gekennzeichnet, dass** der Kolbenkopf (17) der Dreh-Hub-Kolbenpumpen (1, 1') gegenüber dem Radkranz (11), der den Kolben (9) in Drehrichtung mitnimmt, axial verschiebbar gelagert ist.

3. Vorrichtung nach Anspruch 1 oder 2, **dadurch gekennzeichnet, dass** die Steuerkontur (12) der Kolbenköpfe (17) gegenüber dem Radkranz (11) durch Drehung verstellbar ist.

4. Vorrichtung nach einem der Ansprüche 1 bis 3, **dadurch gekennzeichnet, dass** die Gehäusehälften (2, 2') jeweils eine Saugleitung (4, 4') sowie Förderbohrungen (8) enthalten, wobei die Saugleitung (4, 4') sich parallel zur Schneckenwelle (16) erstreckt und durch Saugbohrungen (7) mit den Zylinderkammern der Dreh-Hub-Kolbenpumpen (1, 1') verbunden ist und wobei die Förderbohrungen (8) die Zylinderkammern jeweils mit einer Förderleitung (5) verbinden.

5. Vorrichtung nach einem der Ansprüche 1 bis 4, **dadurch gekennzeichnet, dass** die Gehäusehälften (2, 2') neben den Zylinderkammern angeordnete Gewindebohrungen für Gewindestifte (21) aufweisen, wobei das Ende der Gewindestifte (21) das Widerlager (13) für die Steuerkontur (12) des zugeordneten Kolbens (9) bildet.

6. Vorrichtung nach einem der Ansprüche 1 bis 5, **dadurch gekennzeichnet, dass** die Kolbenköpfe (17) der in einer Boxeranordnung paarweise zugeordneten Dreh-Hub-Kolbenpumpen (1, 1') durch eine Mitnehmereinrichtung (12) miteinander verbunden sind.

7. Vorrichtung nach einem der Ansprüche 1 bis 6, **dadurch gekennzeichnet, dass** an das Gehäuse (2, 2') ein Schmiermittelvorratsbehälter (26) angeschlossen ist, der mit einem in Gehäuselängsrichtung sich erstreckenden Verteilerkanal des Gehäuses verbunden ist, wobei der Verteilerkanal eine durch Saugbohrungen (7) mit den Zylinderkammern der Dreh-Hub-Kolbenpumpen (1, 1') verbundene Saugleitung (4, 4') bildet.

8. Vorrichtung nach Anspruch 7, **dadurch gekennzeichnet, dass** der Schmiermittelvorratsbehälter (26) aus einem gehäusefesten Behälter (29) und einer an den gehäusefesten Behälter angeschlossenen austauschbaren Kartusche (30) besteht.

9. Vorrichtung nach Anspruch 8, **dadurch gekennzeichnet, dass** die Anschlussöffnung des gehäusefesten Behälters (29) einen Dorn enthält, der bei der Montage der Kartusche einen Folienverschluss der Kartusche (30) zerstört.

10. Vorrichtung nach einem der Ansprüche 1 bis 9, **gekennzeichnet durch** eine Steuereinrichtung (28), welche die Antriebseinrichtung (19) in Abhängigkeit eines den Betrieb der zu schmierenden Vorrichtung überwachenden Detektors ein- und ausschaltet, wobei die gemeinsam angetriebenen Dreh-Hub-Kolbenpumpen (1, 1') synchron mit dem Betrieb der zu schmierenden Vorrichtung konstante, individuell für jede Schmierstelle einstellbare Schmiermittelmengenströme fördern.

11. Vorrichtung nach einem der Ansprüche 1 bis 9, **gekennzeichnet durch** eine Steuereinrichtung (28), die Mittel zur Erfassung und Speicherung der Betriebsdauer der zu schmierenden Vorrichtung aufweist und die Antriebseinrichtung in vorgegebenen, an den Betrieb der zu schmierenden Vorrichtung gekoppelten Intervallen schaltet, wobei die gemeinsam angetriebenen Dreh-Hub-Kolbenpumpen (1, 1') vorbestimmte, individuell für jede Schmierstelle einstellbare Schmiermittelmengen abgeben.

12. Vorrichtung nach Anspruch 10 oder 11, **dadurch gekennzeichnet, dass** die Steuereinrichtung (28) Schnittstellen zum Anschluss an eine Fernwarte und zum Anschluss an eine Füllstandskontrolleinrichtung eines an das Gehäuse angeschlossenen Vorratsbehälters (26) aufweist.

## Claims

1. An apparatus for the delivery of lubricating oil, particularly for the delivery of lubricating oil to various lubricating points of a machine, of a conveyor device or of an escalator, comprising
a housing (2, 2'),
at least two rotary-action piston pumps (1, 1') disposed in series in the housing (2, 2'), and
a drive device for a common drive of the rotary-action piston pumps (1, 1'),
wherein means for altering the time of delivery and the amount delivered are disposed in the drive train between a drive shaft (16) of the drive device and the rotary-action piston pumps (1, 1'), **characterised in that**
the housing comprises two housing halves (2, 2'), wherein each housing half (2, 2') contains a plurality of rotary-action piston pumps (1, 1') disposed in series, and wherein the rotary-action piston pumps (1, 1') of the two housing halves (2, 2') are disposed in pairs in a type of horizontally-opposed arrangement,
that the pistons (9) of the rotary-action piston pumps (1, 1') comprise piston heads which in the longitudinal direction of the pistons are provided on one side with a control profile (12) and on the other side are acted upon by pressure springs (14), wherein the pressure strings (14) are disposed in pairs between the piston heads (17) of rotary-action piston pumps (1, 1') which are disposed opposite each other in pairs,
that the drive device comprises at least one worm shaft as a drive shaft (16), which meshes with gear rims (11) of rotary-action piston pumps (1, 1') disposed in series, and
that the control profiles (12) of the piston heads (17) are seated under the action of the associated pressure springs (14) against thrust bearings (13) which can be adjusted on the outside of the housing,
wherein the pistons (9) execute individual piston strokes in accordance with the control profile (12) disposed on the piston head (17), and wherein the quantities which are delivered by the rotary-action piston pumps (1, 1') can be individually varied by adjusting the thrust bearings (13).

2. An apparatus according to claim 1, **characterised in that** the piston head (17) of the rotary-action piston pumps (1, 1') is mounted so that it is axially displaceable in relation to the gear rim (11) which entrains the pistons (9) in the direction of rotation.

3. An apparatus according to claims 1 or 2, **characterised in that** the control profile (12) of the piston heads (17) can be adjusted by rotation in relation to the gear rim (11).

4. An apparatus according to any one of claims 1 to 3, **characterised in that** the housing halves (2, 2') each contain a suction line (4, 4') and also contain delivery bores (8), wherein the suction line (4, 4') extends parallel to the worm shaft (16) and is connected via suction bores (7) to the cylinder chambers of the rotary-action piston pumps (1, 1'), and wherein the delivery bores (8) each connect the cylinder chambers to a delivery line (5).

5. An apparatus according to any one of claims 1 to 4, **characterised in that** the housing halves (2, 2') comprise tapped holes for threaded pins (21) near the cylinder chambers, wherein the ends of the threaded pins (21) form the thrust bearing (13) for the control profile (12) of the associated piston (9).

6. An apparatus according to any one of claims 1 to 5, **characterised in that** the piston heads (17) of the rotary-action piston pumps (1, 1') which are associated in pairs in a horizontally opposed arrangement are connected to each other via a driver device (12).

7. An apparatus according to any one of claims 1 to 6, **characterized in that** a lubricant supply vessel (26) is attached to the housing (2, 2'), which lubricant supply vessel is attached to a distributor channel of the housing which extends in the longitudinal direction of the housing, wherein the distributor channel forms a suction line (4, 4') which is connected to the cylinder chambers of the rotary-action piston pumps (1, 1) by suction bores (7).

8. An apparatus according to claim 7, **characterised in that** the lubricant supply vessel (26) consists of a container (29) fixed to the housing and of a replaceable cartridge (30) which is attached to the container fixed to the housing.

9. An apparatus according to claim 8, **characterised in that** the connection opening of the container (29) which is fixed to the housing contains a spike which destroys a foil closure of the cartridge (30) when the cartridge is installed.

10. An apparatus according to any one of claims 1 to 9, **characterised by** a controller (28) which switches on and switches off the drive device (19) depending on the detector which monitors the apparatus to be lubricated, wherein the jointly driven rotary-action piston pumps (1, 1'), synchronously with the operation of the apparatus to be lubricated, deliver constant quantitative flows of lubricant which can be individually adjusted for each lubrication.

11. An apparatus according to any one of claims 1 to 9, **characterised by** a controller (28) which comprises means for recording and storing the duration of operation of the apparatus to be lubricated, and which sets the drive of the apparatus in operation at predetermined intervals coupled to the operation of the apparatus to be lubricated, wherein the jointly driven rotary-action piston pumps (1, 1') deliver predetermined quantities of lubricant which can be individually adjusted for each lubrication point.

12. An apparatus according to claims 10 or 11, **characterised in that** the controller (28) comprises interfaces for connection to a remote maintenance device and for connection to a level monitoring device (26) of a supply vessel attached to the housing.

## Revendications

1. Dispositif d'alimentation de lubrifiant, en particulier d'alimentation de lubrifiant vers différents emplacements. de lubrification d'une machine, d'un appareil de transport ou d'un escalier roulant, comportant
un boîtier (2, 2'),
au moins deux pompes à pistons rotatifs et alternatifs (1, 1') disposées en une rangée dans le boîtier (2, 2'), et
un dispositif d'entraînement pour un entraînement commun des pompes à pistons rotatifs et alternatifs (1, 1'),
des moyens, destinés à faire varier l'instant d'alimentation et le débit d'alimentation, étant disposés dans la voie d'entraînement entre un arbre d'entraînement (16) du dispositif d'entraînement et les pompes à pistons rotatifs et alternatifs (1, 1'), **caractérisé**
**en ce que** le boîtier comporte deux moitiés de boîtier (2, 2'), chaque moitié de boîtier (2, 2') contenant plusieurs pompes à pistons rotatifs et alternatifs (1, 1') disposées en rangée et les pompes à pistons rotatifs et alternatifs (1, 1') des deux moitiés de boîtier (2, 2') étant associées deux par deux à la manière d'un agencement Boxer,
**en ce que** les pistons (9) des pompes à pistons rotatifs et alternatifs (1, 1') comportent des têtes de piston qui sont pourvues d'un contour de commande (12), sur un côté, dans la direction longitudinale des pistons, et qui sont sollicitées sur l'autre côté par des ressorts de compression (40), les ressorts de compression (40) étant disposés entre les têtes de piston (17) de pompes à pistons rotatifs et alternatifs (1, 1') opposées deux par deux,
**en ce que** le dispositif d'entraînement comporte au moins un arbre à vis sans fin servant d'arbre d'entraînement (16), qui engrène avec des bords de roue (11) de pompes à pistons rotatifs et alternatifs (1, 1') disposées en une rangée, et
**en ce que** les contours de commande (12) des têtes de piston (17) s'appliquent, sous l'effet des ressorts de compression (14) associés, contre des contre-butées (13) qui sont réglables sur le côté extérieur du boîtier,
les pistons (9) exécutant des courses individuelles, en fonction du contour de commande (12) disposé sur la tête de piston (17), et les débits d'alimentation des pompes à pistons rotatifs et alternatifs (1, 1') pouvant être modifiés individuellement, par réglage des contre-butées (13).

2. Dispositif selon la revendication 1, **caractérisé en ce que** la tête de piston (17) des pompes à pistons rotatifs et alternatifs (1, 1') est montée de manière à pouvoir coulisser axialement par rapport au bord de roue (11) qui entraîne le piston dans le sens de rotation.

3. Dispositif selon la revendication 1 ou 2, **caractérisé en ce que** le contour de commande (12) des têtes de piston (17) est réglable par rotation, par rapport au bord de roue (11).

4. Dispositif selon l'une des revendications 1 à 3, **caractérisé en ce que** les moitiés de boîtier (2, 2') contiennent chacune une conduite d'aspiration (4, 4') ainsi que des trous d'alimentation (8), la conduite d'aspiration (4, 4') s'étendant parallèlement à l'arbre à vis sans fin (16) et étant reliée, par des trous d'aspiration (7), aux chambres de cylindre des pompes à pistons rotatifs et alternatifs (1, 1') et les trous d'alimentation (8) reliant chacune des chambres de cylindre à une conduite d'alimentation (5).

5. Dispositif selon l'une des revendications 1 à 4, **caractérisé en ce que** les moitiés de boîtier (2, 2') présentent des trous taraudés, disposés à côté des chambres de cylindre, pour des broches filetées (21), l'extrémité des broches filetées (21) formant la contre-butée (13) pour le contour de commande (12) du piston (9) associé.

6. Dispositif selon l'une des revendications 1 à 5, **caractérisé en ce que** les têtes de piston (17) des pompes à pistons rotatifs et alternatifs (1, 1'), associées deux par deux en un agencement Boxer, sont reliées entre elles par un dispositif entraîneur (12).

7. Dispositif selon l'une des revendications 1 à 6, **caractérisé en ce qu'**au boîtier (2, 2') est raccordé un réservoir de lubrifiant (26) qui est relié à un canal de distribution, s'étendant dans la direction longitudinale du boîtier, le canal de distribution formant une conduite d'aspiration (4, 4') reliée, par des trous d'aspiration (7), aux chambres de cylindre des pompes à pistons rotatifs et alternatifs (1, 1').

8. Dispositif selon la revendication 7, **caractérisé en ce que** le réservoir de lubrifiant (26) est constitué d'un récipient (29) solidaire du boîtier et d'une cartouche (30) échangeable, raccordée au récipient solidaire du boîtier.

9. Dispositif selon la revendication 8, **caractérisé en ce que** l'ouverture de raccordement du récipient (29) solidaire du boîtier contient une broche qui détruit une fermeture en feuille de la cartouche (30), pendant le montage de la cartouche.

10. Dispositif selon l'une des revendications 1 à 9, **caractérisé par** un dispositif de commande (28) qui met en marche et à l'arrêt le dispositif d'entraînement (19), en fonction d'un détecteur surveillant le fonctionnement du dispositif à lubrifier, les pompes à pistons rotatifs et alternatifs (1, 1') entraînées ensemble faisant circuler, de manière synchrone avec le fonctionnement du dispositif à lubrifier, des flux constants de lubrifiant, réglables individuellement pour chaque point de lubrification.

11. Dispositif selon l'une des revendications 1 à 9, **caractérisé par** un dispositif de commande (28) qui comporte des moyens de détection et de mémorisation de la durée de fonctionnement du dispositif à lubrifier, et qui met en marche le dispositif d'entraînement à intervalles donnés, accouplés au fonctionnement du dispositif à lubrifier, les pompes à pistons rotatifs et alternatifs (1, 1') entraînées ensemble délivrant des quantités prédéterminées de lubrifiant, réglables individuellement pour chaque point de lubrification.

12. Dispositif selon la revendication 10 ou 11, **caractérisé en ce que** le dispositif de commande (28) comporte des interfaces pour le raccordement à un poste de télé-assistance et pour le raccordement à un dispositif de contrôle de niveau d'un réservoir (26) raccordé au boîtier.
